Europäisches Patentamt

**European Patent Office**

**Office européen des brevets**

(11) Veröffentlichungsnummer : **0 080 651**
**B1**

(12) **EUROPÄISCHE PATENTSCHRIFT**

(45) Veröffentlichungstag der Patentschrift :
26.03.86

(51) Int. Cl.⁴ : **B 23 K 26/04**

(21) Anmeldenummer : **82110598.8**

(22) Anmeldetag : **16.11.82**

(54) Verfahren zum Justieren des Bezugssystems eines im Riesenimpulsbetrieb arbeitenden Lasergerätes.

(30) Priorität : **30.11.81 DE 3147355**

(43) Veröffentlichungstag der Anmeldung :
**08.06.83 Patentblatt 83/23**

(45) Bekanntmachung des Hinweises auf die Patenterteilung : **26.03.86 Patentblatt 86/13**

(84) Benannte Vertragsstaaten :
**AT BE CH FR GB IT LI NL SE**

(56) Entgegenhaltungen :
**FR-A- 1 498 559**
**FR-A- 2 352 624**
**US-A- 3 622 742**

(73) Patentinhaber : **Siemens Aktiengesellschaft**
**Berlin und München Wittelsbacherplatz 2**
**D-8000 München 2 (DE)**

(72) Erfinder : **Troukens, Theo**
**Poelsstraat**
**B-8020 Oostkamp (BE)**
Erfinder : **Mattelin, Antoon, Dipl.-Ing.**
**Rustoordstraat 37**
**B-8020 Oostkamp (BE)**

Jouve, 18, rue St-Denis, 75001 Paris, France

## Beschreibung

Die Erfindung bezieht sich auf ein Verfahren zum Justieren des Bezugssystems eines vorprogrammierbaren Strahlenablenksystems eines im Riesenimpulsbetrieb arbeitenden, prozeßrechnergesteuerten Lasergerätes in bezug auf die Lage eines Beschriftungsfeldes eines zu beschriftenden Teiles, insbesondere eines Siliziumwafers, unter Zusammenwirken einer programmierten Suchbewegung des das Teil im Dauerstrichbetrieb abtastenden Laserstrahls mit Fotoelementen zur Abgabe von Positionssignalen, aus denen mit Hilfe des Prozeßrechners die genaue Lage des Teiles in bezug auf das Bezugssystem errechnet und anschließend die Koordinaten des Bezugssystems entsprechend korrigiert werden, sowie eine Vorrichtung zur Durchführung des Verfahrens.

Ein derartiges Verfahren ist aus der DE-C-2 335 517 bekannt. Bei diesem bekannten Verfahren ist die Suchbewegung des das Teil im Dauerstrichbetrieb abtastenden Laserstrahls so programmiert, daß innerhalb des zu beschriftenden Teiles angeordnete Bezugsmarken aufgefunden werden können. Weiter sind die Fotoelemente oberhalb der Arbeitsfläche so angeordnet, daß sie den reflektierten Laserstrahl erfassen können. Hierbei ist jeder Bezugsmarke ein Fotoelement zugeordnet, das ein Signal auslöst, sobald der reflektierte Laserstrahl auf diese auftrifft. Voraussetzung hierfür ist jedoch, daß das zu beschriftende Teil so zugeführt wird, daß nurmehr eine relativ geringe Korrekturbewegung nötig ist.

Bekannt sind ferner Lasergeräte (z. B. US-PS 3 902 036) zum Bearbeiten und Beschriften, bei denen in den Strahlengang eines gepulsten Bearbeitungslasers ein Meßstrahl eines Meßlasers eingeblendet ist. Dies setzt allerdings voraus, daß das Werkstück oder das zu beschriftende Teil hinsichtlich seines Bearbeitungsontes genau zum Bezugssystem des Bearbeitungslasers ausgerichtet ist. Das Ausrichten des Werkstückes erfordert nicht nur einen erheblichen Zeitaufwand, sondern setzt auch kostenspielige Vorrichtungen wie x-y-Arbeitstische voraus. Aus diesem Grunde wird in der DE-OS 26 24 121 vorgeschlagen, daß man mittels des Lasermeßstrahles die in ihrer Form und Größe bekannte Werkstückoberfläche abtastet und das von der Werkstückoberfläche reflektierte Licht des Lasermeßstrahles mit Hilfe von Fotodioden zur Erkennung der Lage des Werkstückes innerhalb des Arbeitsfeldes des Bearbeitungslasers derart nutzt, daß die Lagekoordinaten der Werkstückoberfläche in Bezug auf die Mittelpunktskoordinaten der Arbeitsfläche des Bearbeitungslasers ermittelt werden können. Mit Hilfe des Prozeßrechners werden aus diesen Signale die Mittelpunktskoordinaten der Werkstückoberfläche im Arbeitsfeld errechnet und anschließend das Steuerprogramm für den Bearbeitungslaser auf die Mittelpunktskoordinaten der Werkstückoberfläche transformiert.

Der Erfindung liegt ausgehend vom Stand der Technik gemäß DE-C 2 335 517 die Aufgabe zugrunde, ein Verfahren und eine Vorrichtung der eingangs beschriebenen Art derart zu verbessern, daß es erheblich weniger Aufwand erfordert, wie die zuvor geschilderten Anlagen. Diese Aufgabe wird mit den Merkmalen der Patentansprüche 1 und 3 gelöst.

Dadurch, daß die unter dem zu beschriftenden Teil angeordneten Fotoelemente unmittelbar angesteuert werden, ergeben sich nicht nur eindeutige elektrische Signale, sondern auch eine Verringerung des baulichen und steuerungstechnischen Aufwandes. Ferner ist bei entsprechender Bemessung und Anordnung der Fotoelemente eine Anpassung an verschieden große Teile leicht möglich. Außerdem brauchen die zu beschriftenden Teile nicht extra mit Markierungen versehen zu sein. Daher eignet sich das erfindungsgemäße Verfahren besonders zum Beschriften von Siliziumwafern, bei denen irgendwelche Markierungszeichen nicht vorgesehen sein dürfen. Das Beschriftungsfeld ist bei solchen Siliziumwafern meistens an einem abgeflachten Randteil vorgesehen. Hierbei ist es zweckmäßig, daß mit zwei zueinander parallelen Abtastbewegungen in der y-Achse des Bezugssystems der programmierten Abtastbewegungen die relative Lage des abgeflachten Randteiles zum Bezugssystem erfaßt wird, daß anschließend das Bezugssystem so transformiert wird, daß die x-Achse des Bezugssystems parallel zum abgeflachten Randteil verläuft und daß mit zwei parallel zur y-Achse und entgegengesetzt gerichtete Abtastbewegungen die Lage der Mitte zwischen den sich an dem abgeflachten Randteil anschließenden runden Randteilen des Siliziumwafers ermittelt und das Bezugssystem entsprechend korrigiert wird.

Sofern genügend große Fotoelemente zur Verfügung stehen, kann für eine oder mehrere Bewegungen ein einziges Fotoelement vorgesehen sein. Liegen jedoch die Abtastbewegungen sehr weit voneinander, dann ist es zweckmäßig, daß für jede Abtastbewegung des Laserstrahles ein unterhalb des Siliziumwafers angeordnetes Fotoelement vorgesehen ist. Um Siliziumwafer mit unterschiedlichen Scheibendurchmessern bearbeiten zu können, ist es zweckmäßig, daß das oder die Fotoelemente zur Anpassung an den jeweiligen Scheibendurchmesser des Siliziumwafers vorzugsweise in der x- und y-Richtung verstellbar angeordnet sind.

Vorzugsweise sind das oder die Fotoelemente in bzw. unter einer Aussparung des Auflagetisches des Beschriftungslasers angeordnet und zwecks Abschirmung des Umgebungslichtes durch ein optisches Filter abgedeckt.

Damit eine gute Ausleuchtung der Fotoelemente vorgenommen werden kann, ist es vorteilhaft, daß dem oder den Fotoelementen ein Filter und ein Diffusor vorgeschaltet ist, so daß der Laserstrahl im Dauerstrichbetrieb entsprechend abgeschwächt und divergiert wird.

Jedem Fotoelement ist zweckmäßigerweise ein Strom-Spannungswandler und ein Schwellwertverstärker nachgeschaltet, wobei die Ausgänge der einzelnen Schwellwertverstärker mit dem Eingang eines nichtinvertierenden Verstärkers verbunden sind, dem vorzugsweise ein weiterer Schwellwertverstärker zum Unterdrücken der unerwünschten Ausgangssignale der erstgenannten Schwellwertverstärker nachgeschaltet ist.

Anhand der Zeichnung wird ein Ausführungsbeispiel des erfindungsgemäßen Verfahrens näher erläutert.

Es zeigen :

Figur 1 eine Anordnung zur Durchführung des erfindungsgemäßen Verfahrens,

Figur 2 eine Anordnung der Fotoelemente und eine Darstellung der vier programmierten Suchbewegungen,

Figur 3 eine vergrößerte Darstellung eines Teiles der Vorrichtung zur Durchführung des Verfahrens und

Figur 4 eine Schaltungsanordnung für die Fotoelemente.

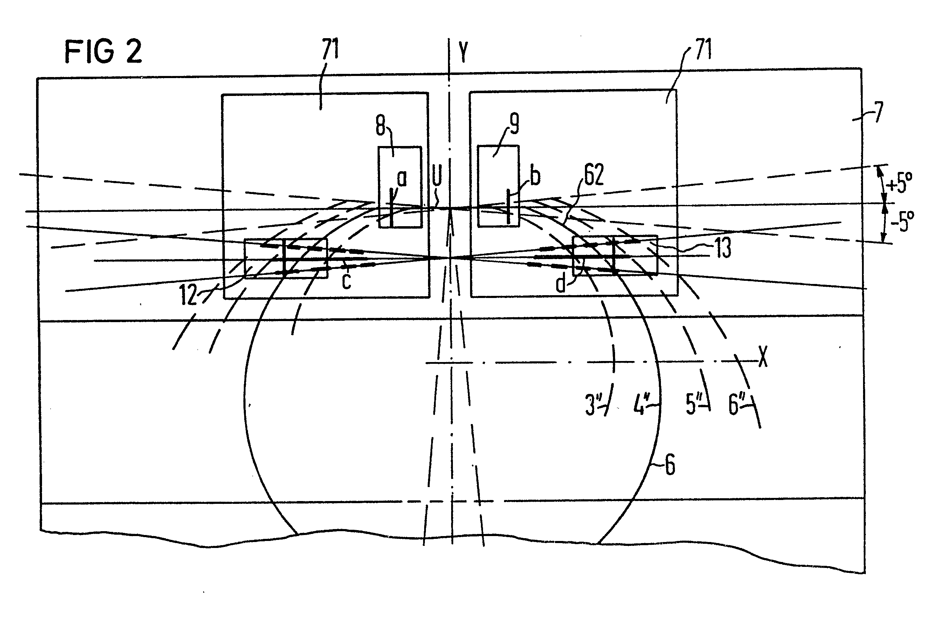

Die Zeichnung zeigt eine Anordnung zur Durchführung des erfindungsgemäßen Verfahrens bei der Flatsuche eines Siliziumwafers in schematischer Darstellung. In dem Strahlengang eines Lasers 1 sind aufeinanderfolgend ein Fotoverschluß 2, ein Drehspiegel 3 für die vertikale Ablenkung des Laserstrahles und ein Drehspiegel 4 für die horizontale Ablenkung des Laserstrahles angeordnet. Der Laserstrahl wird mit Hilfe eines Objektives 5 auf die Oberfläche eines Siliziumwafers 6 fokussiert, welcher auf einem Arbeitstisch 7 angeordnet ist. Der Siliziumwafer 6 weist in an sich bekannter Weise einen abgeflachten Randteil (Flat) 61 auf, unter welchem zwei entsprechend große Fotoelemente 8 und 9 so angeordnet sind, daß sowohl der abgeflachte Randteil 61 als auch der runde Randteil 62 des Siliziumwafers 6 darüber zu liegen kommen. Ein Prozeßrechner 10 steuert einerseits die Intensität des Lasers 1, den Fotoverschluß 2 sowie die Ablenkung des Laserstrahles durch die Drehspiegel 3 und 4 und nimmt andererseits das Programm einer Eingabe 11 sowie Signale der Fotoelemente 8 und 9 auf. Um die Lage des dem Laser 1 automatisch zugeführten Siliziumwafers 6 feststellen zu können, werden vier Suchbewegungen a bis d des im Dauerstrichbetrieb arbeitenden Laserstrahles so programmiert, wie Figur 2 zeigt. Jede der vier Bewegungen a bis d ist so programmiert, daß der Rand des Siliziumwafers 6 mit Sicherheit überschritten wird, wobei bei jedem Übergang das unter dem Wafer angeordnete zugehörige Fotoelement angesteuert wird. Auf diese Weise wird ein genaues Positionssignal dem Prozeßrechner 10 mitgeteilt, der die Koordinaten dieses Übergangspunktes festhält. Durch die Abtastung charakteristischer Randteile können die Mittelpunktkoordinaten des Siliziumwafers 6 sowie die Koordinaten des Bezugssystems genau in Übereinstimmung gebracht werden.

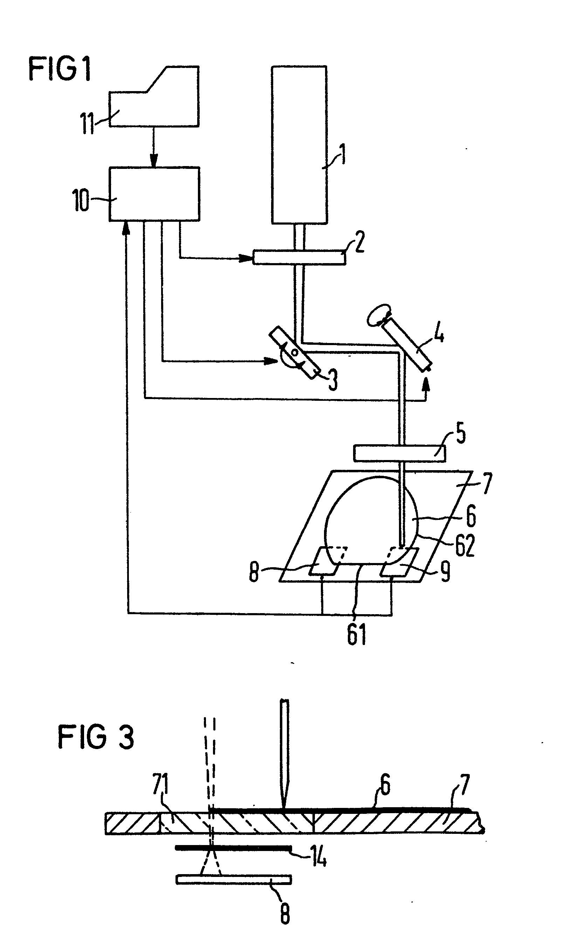

Wie aus Figur 2 zu ersehen ist, sind im Gegensatz zu der Ausführung nach Figur 1 unter einem Siliziumwafer 6 zusätzlich zu den Fotoelementen 8 und 9 noch weitere Fotoelemente 12 und 13 vorgesehen, wobei die Fotoelemente 8 und 9 dem abgeflachten Randteil 61 und die Fotoelemente 12 und 13 dem sich an den abgeflachten Randteil 61 anschließenden runden Randteil 62 zugeordnet sind. Mit zwei programmierten Abtastbewegungen a und b in der y-Achse des Bezugssystems der programmierten Abtastbewegung kann die relative Lage des abgeflachten Randteiles 61 zum Bezugssystem erfaßt werden. Nachdem dies erfaßt ist, wird das Bezugssystem so transformiert, daß die x-Achse des Bezugssystems parallel zum abgeflachten Randteil 61 verläuft. Danach wird mit den zwei programmierten Abtastbewegungen c und d, die einander entgegengesetzt gerichtet sind, die Lage der Mitte zwischen den sich an den abgeflachten Randteil 61 anschließenden runden Randteil 62 des Siliziumwafers 6 ermittelt und das Bezugssystem entsprechend dieser Abweichung korrigiert.

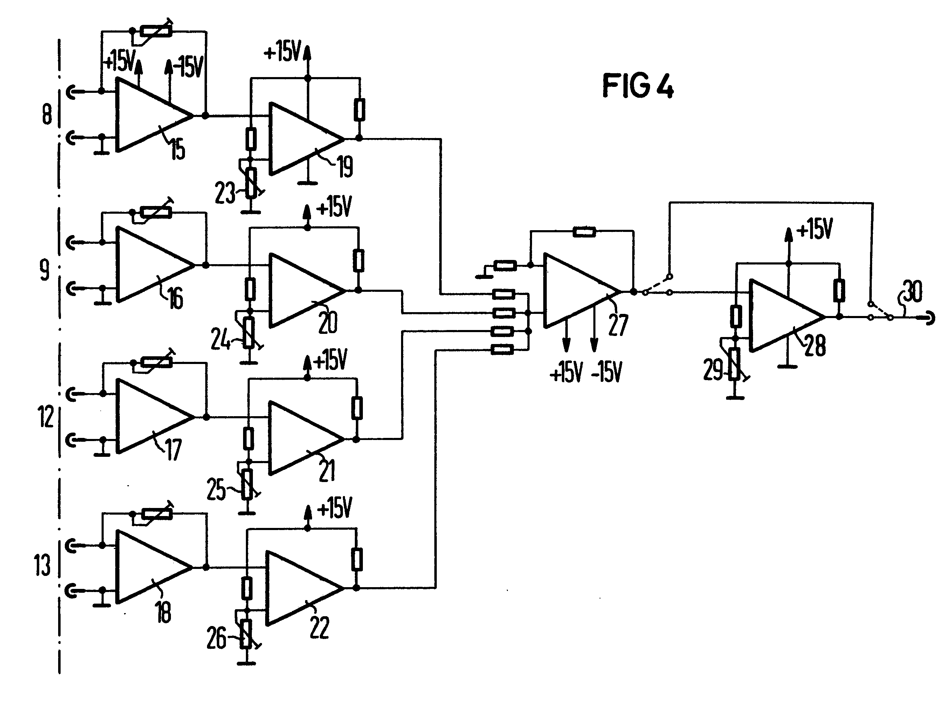

Figur 3 zeigt im vergrößerten Maßstab im Prinzip die Anordnung der Fotoelemente, z. B. des Fotoelementes 8, das unterhalb des Arbeitstisches 7 innerhalb bzw. unterhalb einer fensterförmigen Aussparung 71 angeordnet ist. Der Randteil 62 des Siliziumwafers 6 liegt über dieser Aussparung 71, so daß der Laserstrahl bei Überschreiten des Randteiles 62 auf das Fotoelement 8 trifft, wie mit gestrichelten Linien angedeutet ist. Um Fremdlicht abzuhalten, ist die Aussparung 71 mit einem optischen Filter versehen, unter dem sich ein Diffusor 14 befindet, der den Laserstrahl im Dauerstrichbetrieb nicht nur abschwächt, sondern auch divergiert, wie mit gestrichelten Linien angedeutet ist. Damit wird mit Sicherheit vermieden, daß das Fotoelement 8 durch den auf die Scheibenoberfläche des Siliziumwafers 6 fokussierten Laserstrahl beschädigt wird. Außerdem ergibt sich eine bessere Ausleuchtung des Fotoelementes 8. Für die Kompensation der Lageabweichung braucht der Laser nur von Riesenimpulsbetrieb auf Dauerstrich umgeschaltet zu werden, ohne daß die Fokussierung geändert zu werden braucht.

Wie aus Figur 2 zu ersehen ist, können durch entsprechende Anordnung der Fotoelemente 8, 9, 12 und 13 verschieden große Siliziumwafer 6 (z. B. mit einem Durchmesser von 3", 4", 5" und 6") erfaßt werden, wenn sie entsprechend toleriert zugeführt werden. Durch entsprechende Verstellung der Fotoelemente in x- und y-Richtung können relativ kleine Fotoelemente verwendet werden. Als Diffusor können an sich bekannte Filter verwendet werden, wobei die Dicke so gewählt wird, daß eine gewünschte Divergenz des Laserstrahles zustandekommt.

Sofern eine entsprechend tolerierte Zuführung möglich ist, kann auf aufwendige in x- und y-Richtung verstellbare Arbeitstische verzichtet werden.

Figur 4 zeigt ein Schaltschema für die Erfassung und Auswertung der von den Fotoelementen 8, 9, 12 und 13 kommenden Signale. Über an sich bekannte Strom-Spannungswandler 15 bis 18 werden die von den Fotoelementen kommenden Ströme in Spannungen umgewandelt und Schwellwertverstärkern 19 bis 22 zugeführt. Über Potentiometer 23 bis 26 kann der Schwellwert so eingestellt werden, daß Störeinflüsse wie Fremdlicht und dgl. ausgeschaltet werden können. Die Ausgänge der Schwellwertverstärker 19 bis 22 sind mit dem nichtinvertierenden Eingang eines Summenverstärkers 27 verbunden, welchem ein weiterer Schwellwertverstärker 28 nachgeschaltet ist. Über ein Potentiometer 29 kann der Schwellwert zur Unterdrückung der nicht erwünschten Ausgangssignale eingestellt werden. Der Ausgang 30 steht direkt mit dem Eingang des Prozeßrechners 10 in Verbindung.

Bezugszeichenliste

1 Laser
2 Fotoverschluß
3 Drehspiegel (vertikal)
4 Drehspiegel (horizontal)
5 Objektiv
6 Siliziumwafer
61 Randteil (Flat)
62 Randteil
7 Arbeitstisch
71 Aussparung
8 Fotoelement
9 Fotoelement
10 Prozeßrechner
11 Eingabe
12 Fotoelement
13 Fotoelement
14 Diffusor
15 Strom-Spannungswandler
16 Strom-Spannungswandler
17 Strom-Spannungswandler
18 Strom-Spannungswandler
19 Schwellwertverstärker
20 Schwellwertverstärker
21 Schwellwertverstärker
22 Schwellwertverstärker
23 Potentiometer
24 Potentiometer
25 Potentiometer
26 Potentiometer
27 Summenverstärker
28 Schwellwertverstärker
29 Potentiometer
30 Ausgang

a Suchbewegung
b Suchbewegung
c Suchbewegung
d Suchbewegung

**Patentansprüche**

1. Verfahren zum Justieren des Bezugssystems eines vorprogrammierbaren Strahlenablenksystems eines im Riesenimpulsbetrieb arbeitenden Lasergerätes (1) in bezug auf die Lage eines Beschriftungsfeldes eines zu beschriftenden Teiles (6), insbesondere eines Siliziumwafers, unter Zusammenwirken einer programmierten Suchbewegung des das Teil (6) im Dauerstrichbetrieb abtastenden Laserstrahles mit Fotoelementen (8, 9, 12, 13) zur Abgabe von Positionssignalen, aus denen die genaue Lage des Teiles (6) in bezug auf das Bezugssystem errechnet und anschließend die Koordinaten (x, y) des Bezugssystems entsprechend korrigiert werden, dadurch gekennzeichnet, daß die Suchbewegungen (a bis d) des im Dauerstrichbetrieb arbeitenden Laserstrahles so programmiert sind, daß der Rand des zu beschriftenden Teiles (6) bei jeder Suchbewegung überschritten wird, und daß bei jeder Überschreitung des Randes durch ein zumindest unter diesem Randteil angeordnetes Fotoelement (8, 9, 12, 13) ein entsprechendes Positionssignal ausgelöst und in der rechnergesteuerten Anlage ausgewertet wird.

2. Verfahren nach Anspruch 1, dadurch gekennzeichnet, daß bei einem an einem abgeflachten Randteil (61) eines Siliziumwafers (6) vorgesehenen Beschriftungsfeld insgesamt vier Abtastbewegungen (a bis d) des Laserstrahles derart programmiert sind, daß mit zwei zueinander parallelen Abtastbewegungen (a und b) in der y-Achse des Bezugssystems der programmierten Abtastbewegungen die relative Lage des abgeflachten Randteiles (61) zum Bezugssystem erfaßt wird, daß anschließend das Bezugssystem so transformiert wird, daß die x-Achse des Bezugssystems parallel zum abgeflachten Randteil (61) verläuft, und daß mit zwei parallel zur y-Achse und entgegengesetzt gerichteten Abtastbewegungen (c und d) die Lage der Mitte zwischen den sich an dem abgeflachten Randteil (61) anschließenden runden Randteilen (62) des Siliziumwafers (6) ermittelt und das Bezugssystem entsprechend korrigiert wird.

3. Vorrichtung zur Durchführung des Verfahrens nach Anspruch 1 oder 2, bei welcher für jede Abtastbewegung (a bis d) des Laserstrahles ein Fotoelement (8, 9, 12, 13) vorgesehen ist, dadurch gekennzeichnet, daß das oder die Fotoelemente (8, 9, 12, 13) im Randbereich unterhalb des zu beschriftenden Siliziumwafers (8) angeordnet sind.

4. Vorrichtung nach Anspruch 3, dadurch gekennzeichnet, daß das oder die Fotoelemente (8, 9, 12, 13) zur Anpassung an den jeweiligen Scheibendurchmesser des Siliziumwafers (6) vorzugsweise in der x- und y-Richtung verstellbar angeordnet sind.

5. Vorrichtung nach Anspruch 3 oder 4, dadurch gekennzeichnet, daß das oder die Fotoelemente (8, 9, 12, 13) in bzw. unter einer Aussparung (71) des Arbeitstisches (7) des Beschriftungslaser (1) angeordnet und zwecks Abschirmung des Umgebungslichtes durch ein optisches Filter abgedeckt sind.

6. Vorrichtung nach einem der Ansprüche 3 bis 5, dadurch gekennzeichnet, daß dem oder den Fotoelementen (8, 9, 12, 13) ein Filter und ein Diffusor (14) vorgeschaltet ist, so daß der Laserstrahl im Dauerstrichbetrieb entsprechend abgeschwächt und divergiert wird.

7. Vorrichtung nach einem der Ansprüche 3 bis 6, dadurch gekennzeichnet, daß jedem Fotoelement (8, 9, 12, 13) ein Strom-Spannungswandler (15 bis 18) und ein Schwellwertverstärker (19 bis 22) nachgeschaltet ist.

8. Vorrichtung nach Anspruch 7, dadurch gekennzeichnet, daß die Ausgänge der einzelnen Schwellwertverstärker (19 bis 22) mit dem Eingang eines nichtinvertierenden Verstärkers (27) verbunden sind, dem vorzugsweise ein weiterer Schwellwertverstärker (28) zum Unterdrücken der unerwünschten Ausgangssignale der erstgenannten Schwellwertverstärker (19 bis 22) nachgeschaltet ist.

## Claims

1. A reference system adjusting process for setting a preprogrammable beam-deflecting system of a laser device (1) operating in the giant pulse mode, relative to the position of an inscription array of a component (6) which is to be inscribed, in particular a silicon wafer, with the assistance of a programmed search movement of the laser beam which scans the component (6) in continuous wave operation, using photo-elements (8, 9, 12, 13) in order to emit position signals from which the precise position of the component (6) relative to the reference system is calculated, whereupon the coordinates (x, y) of the reference system are corrected accordingly, characterised in that the search movements (a to d) of the laser beam, operating in continuous wave mode, are programmed to be such that each search movement crosses the edge of the component (6) which is to be inscribed, and that each time the edge is crossed a corresponding position signal is triggered by a photo-element (8, 9, 12, 13) arranged at least beneath this component edge, and is analysed in the computer-controlled system.

2. A process as claimed in Claim 1, characterised in that when an inscription array is provided on a flat-edged section (61) of a silicon wafer (6), a total of four scanning movements (a to d) of the laser beam are programmed to be such that with two scanning movements (a and b), parallel to one another in the y-axis of the reference system of the programmed scanning movements, the relative position of the flat-edged section (61) to the reference system is detected, that the reference system is then transformed in such manner that the x-axis of the reference system runs parallel to the flat-edged section (61), and that with two oppositely-directed scanning movements (c and d) parallel to the y-axis the position of the centre between the rounded-edged sections (62) of the silicon wafer (6) which adjoin the flat-edged section (61) is determined and the reference system is corrected accordingly.

3. A device for the implementation of the process claimed in Claim 1 or 2, in which one photo-element (8, 9, 12, 13) is provided for each scanning movement (a to d) of the laser beam, characterised in that the photo-elements (8, 9, 12, 13) are arranged in the edge zone beneath the silicon wafer (8) which is to be inscribed.

4. A device as claimed in Claim 3, characterised in that for adaptation to the particular wafer diameter of the silicon wafer (6), the photo-elements (8, 9, 12, 13) are preferably arranged so as to be adjustable in the x- and y-direction.

5. A device as claimed in Claim 3 or 4, characterised in that the photo-elements (8, 9, 12, 13) are arranged in or beneath a recess (71) in the operating table (7) of the inscription laser (1), and are covered by an optical filter in order to screen the ambient light.

6. A device as claimed in one of the Claims 3 to 5, characterised in that the or each photo-element (8, 9, 12, 13) is preceded by a filter and a diffuser (14) so that in the continuous wave operation the laser beam is correspondingly weakened and diverged.

7. A device as claimed in one of the Claims 3 to 6, characterised in that each photo-element (8, 9, 12, 13) is connected at its output end to a current-voltage converter (15 to 18) and to a threshold value amplifier (19 to 22).

8. A device as claimed in Claim 7, characterised in that the outputs of the individual threshold value amplifiers (19 to 22) are connected to the non-inverting input of an amplifier (27) whose output is preferably connected to a further threshold value amplifier (28) which serves to suppress the undesired output signals of the first-mentioned threshold value amplifiers (19 to 22).

## Revendications

1. Procédé pour ajuster le système de référence d'un système déviateur de rayon préprogrammable d'un appareil laser (1) à fonctionnement déclenché par rapport à la position d'une zone d'inscription d'une pièce (6) à marquer, en particulier d'une plaquette de silicium, utilisant la coopération d'un mouvement chercheur programmé du rayon laser explorant la pièce (6) en régime continu avec des éléments photoélectriques (8, 9, 12, 13) destinés à délivrer des signaux de position, à partir desquels est calculée la position exacte de la pièce (6) par rapport au système de référence et les coordonnées (x, y) du système de référence sont ensuite corrigées en conséquence, caractérisé en ce que les mouvements chercheurs (a à d) du rayon laser travaillant en régime continu sont programmés de manière que le bord de la pièce (6) à marquer soit dépassé à chaque mouvement chercheur et

que, à chaque dépassement du bord, un élément photoélectrique (8, 9, 12, 13) disposé au moins sous cette partie du bord produit un signal de position correspondant qui est exploité dans l'installation commandée par le calculateur.

2. Procédé selon la revendication 1, caractérisé en ce

que, dans le cas d'une zone d'inscription prévue sur une partie de bord aplatie ou méplat (61) d'une plaquette de silicium (6), quatre mouvements explorateurs en tout (a à d) du rayon laser sont programmés de manière que la position du méplat (61) par rapport au système de référence soit déterminée par deux mouvements explorateurs (a et b) parallèles entre eux suivant l'axe y du système de référence des mouvements explorateurs programmés,

que le système de référence est ensuite transformé de manière que l'axe x du système de référence soit parallèle au méplat (61) et

que, par deux mouvements explorateurs (c et d) parallèles à l'axe y mais de sens opposés, la position du milieu entre les parties circulaires du bord (62) se raccordant au méplat (61) de la plaquette de silicium (6) est déterminée et le système de référence est corrigé en conséquence.

3. Dispositif pour la mise en œuvre du procédé selon la revendication 1 ou 2, dans lequel un élément photoélectrique (8, 9, 12, 13) est prévu pour chaque mouvement explorateur (a à d) du rayon laser, caractérisé en ce que l'élément photoélectrique ou les éléments photoélectriques (8, 9, 12, 13) est ou sont disposé(s) dans la région du bord sous la plaquette de silicium (6) à marquer.

4. Dispositif selon la revendication 3, caractérisé en ce que l'élément photoélectrique ou les éléments photoélectriques (8, 9, 12, 13) est ou sont disposé(s) réglable(s), de préférence suivant les directions x et y, en vue de l'adaptation au diamètre de la plaquette de silicium (6) à traiter.

5. Dispositif selon la revendication 3 ou 4, caractérisé en ce que l'élément photoélectrique ou les éléments photoélectriques (8, 9, 12, 13) est ou sont disposé(s) dans ou sous un évidement (71) de la table de travail (7) du laser d'inscription (1) et sont recouverts par un filtre optique en vue de l'isolation vis-à-vis de la lumière ambiante.

6. Dispositif selon une des revendications 3 à 5, caractérisé en ce que l'élément photoélectrique ou les éléments photoélectriques (8, 9, 12, 13) est ou sont précédés d'un filtre et d'un diffuseur (14), de sorte que le rayon laser en régime continu est atténué et est soumis à une divergence de manière adéquate.

7. Dispositif selon une des revendications 3 à 6, caractérisé en ce que chaque élément photoélectrique (8, 9, 12, 13) est suivi d'un convertisseur courant-tension (15 à 18) et d'un amplificateur à seuil (19 à 22).

8. Dispositif selon la revendication 7, caractérisé en ce que les sorties des différents amplificateurs à seuil (19 à 22) sont connectées à l'entrée d'un amplificateur non inverseur (27) qui est de préférence suivi d'un autre amplificateur à seuil (28) pour la suppression des signaux de sortie indésirés des amplificateurs à seuil (19 à 22) mentionnés en premier.

FIG1

FIG 3

FIG 2

FIG 4

0 080 651